# EUROPÄISCHE PATENTSCHRIFT

(11) **EP 1 300 233 B1**
(45) Veröffentlichungstag und Bekanntmachung des Hinweises auf die Patenterteilung: **28.04.2004**
(21) Anmeldenummer: 02021084.5
(22) Anmeldetag: 21.09.2002
(51) Int. Cl.: B29C 47/82, B29C 45/74

(54) **Verfahren und Vorrichtung zum Beheizen eines Plastifizierzylinders**
Method and device for heating a plasticising cylinder
Procédé et dispositif de chauffage d'un cylindre de plastification

(30) Priorität: 04.10.2001 DE 10149149
(43) Veröffentlichungstag der Anmeldung: 09.04.2003
(73) Patentinhaber: RUHRGAS AKTIENGESELLSCHAFT, 45138 Essen (DE); WEMA GmbH, 58515 Lüdenscheid (DE)
(72) Erfinder: Adelt, Marius, Dr.-Ing., 46286 Dorsten (DE); Arthkamp, Jochen, Dr.-Ing., 45665 Recklinghausen (DE); Seibert, Hans-Dieter, 45239 Eseen (DE)
(74) Vertreter: Harlacher, Mechthild

(56) Entgegenhaltungen:
- DE-B- 1 186 207
- GB-A- 1 599 276
- SU-A- 1 348 204
- US-A- 4 541 792
- US-A- 4 828 020
- US-A- 5 200 205
- PATENT ABSTRACTS OF JAPAN vol. 013, no. 327 (M-854), 24. Juli 1989 (1989-07-24) & JP 01 110119 A (FUJI PHOTO FILM CO LTD), 26. April 1989 (1989-04-26)

## Beschreibung

Die Erfindung betrifft ein Verfahren zum Beheizen eines Plastifizierzylinders für die Kunststoffbe- und -verarbeitung, beispielsweise zum Aufschmelzen, Granulieren, Spritzgießen, Extrudieren, Blasformen, Kalandrieren etc. von Kunststoffen.

Im Plastifizierzylinder arbeitet eine Schnecke, die den Kunststoff fördert und plastifiziert. Die dadurch erzeugte Erwärmung wird unterstützt durch eine externe Beheizung.

Externe Beheizungen arbeiten beispielsweise mit elektrisch beheizten Bändern oder Schalen, die auf den Plastifizierzylinder aufgespannt werden und Beheizungszonen bilden, zwischen denen Temperatursprünge auftreten können.

Aus der US-A-4 828 020 ist eine Heiz-/Kühlvorrichtung für einen Extruder- Zylinder bekannt, die eine derartige elektrische Beheizung aufweist.

Außerdem ist bekannt, Plastifizierzylinder mit einem Heiz- oder Kühlmedium zu beaufschlagen. So zeigt die US-A-4 541 792 ein Temperatur-Steuersystem für Extruder, u. a. für Gummi, mit einem Warmwasser- und einem Kaltwasser-Kreislauf. Weiterhin ist im Patent Abstract of Japan vol. 013, no 327 (M-854) ein Verfahren zur Steuerung der Temperatur eines Injektions- Zylinders beschrieben, bei dem ein Heizmedium mittels einer Pumpe rezirkuliert wird.

Die Beheizung soll ein vorgegebenes Temperaturprofil über der axialen Erstreckung des Plastifizierzylinders erzeugen. Das Temperaturprofil soll einen sanften Verlauf aufweisen. Insbesondere gilt es, örtliche Überhitzungen zu vermeiden.

Diesbezüglich erweisen sich bekannte Systeme als nicht optimal.

Der Erfindung liegt die Aufgabe zugrunde, die Temperaturführung bei der externen Beheizung des Plastifizierzylinders zu verbessern.

Diese Aufgabe wird bei dem eingangs genannten Verfahren erfindungsgemäß durch die kennzeichnenden Merkmale des Anspruches 1 gelöst.

Dem Plastifizierzylinder wird die Wärme gleichzeitig konvektiv und als Strahlungswärme ringförmig zugeführt. Auf diese Weise lässt sich Ober der gesamten Länge des Plastifizierzylinders ein sehr sanftes Temperaturprofil erzielen. Der Eintrag der Wärme, insbesondere der Strahlungswärme lässt sich steuern und auf unterschiedliche Zonen über der axialen Erstreckung des Plastifizierzylinders verteilen. Örtliche Überhitzungen können zuverlässig vermieden werden. Auch lässt sich ohne weiteres jede beliebige Temperaturführung erzielen. So können stetige oder stufenförmige Temperaturprofile ausgebildet werden.

Von wesentlicher Bedeutung ist, dass erfindungsgemäß eine sehr gleichmäßige Temperaturverteilung über dem Umfang des Plastifizierzylinders erzielt wird. Dies verhindert ein Verziehen des Plastifizierzylinders, wodurch ein erhöhter Verschleiß wirksam vermieden wird.

Zur Lösung der gestellten Aufgabe schafft die Erfindung ferner eine Vorrichtung zum Beheizen eines Plastifizierzylinders für die Kunststoffbe- und verarbeitung, mit
- einem inneren Rohr, das den Plastifizierzylinder umgibt und mit diesem einen inneren Ringraum definiert,
- einem äußeren Rohr, dass das erste Rohr umgibt und mit diesem einen äußeren Ringraum bildet, und
- mindestens einer Verbrennungseinrichtung zum ringförmigen Beheizen mindestens eines axialen Abschnitts des inneren Rohres durch Strahlung und Konvektion, wobei der äußere Ringraum an seinem einen axialen Ende geschlossen ist und an seinem anderen axialen Ende mit dem inneren Ringraum in Verbindung steht, wobei dieser an seinem entgegengesetzten Ende einen Abgasauslass aufweist.

Die Verbrennungseinrichtung beheizt also den zugehörigen axialen Abschnitt des ersten Rohres bzw. dessen gesamten Umfang, und zwar durch Strahlungswärme und durch Anströmen mit Abgas. Das Abgas durchströmt den äußeren Ringraum in axialer Richtung, wobei es weiterhin Wärme an das erste Rohr abgibt. Sodann tritt es am entgegengesetzten Ende in den inneren Ringraum ein und durchströmt diesen in entgegengesetzter Richtung bis zum Gasauslass. Dabei kommt es zu einem konvektiven Wärmeübergang zwischen dem Abgas und dem Plastifizierzylinder. Dem Abgas wird außerdem kontinuierlich Wärme vom ersten Rohr zugeführt. Neben diesem konvektiven Wärmeübergang kommt es am Orte der Verbrennungseinrichtung zu einer intensiven Übertragung von Strahlungswärme auf den Plastifizierzylinder, da hier das erste Rohr eine hohe Temperatur aufweist. Allerdings wird durch die Überlagerung mit dem konvektiven Wärmeübergang zuverlässig dafür gesorgt, dass es nicht zu einer örtlichen Überhitzung kommt.

Wird mit einer einzigen Verbrennungseinrichtung gearbeitet, so lässt sich über der axialen Erstreckung des Plastifizierzylinders eine sehr gleichmäßige Temperaturverteilung erzielen. Diese kann durch die Positionierung der Verbrennungseinrichtung zusätzlich beeinflusst werden. Bevorzugt wird man die einzige Verbrennungseinrichtung an demjenigen Ende des äußeren Ringraums anordnen, das dem Übergang zum inneren Ringraum entgegengesetzt ist. Durch Verwendung einer Mehrzahl von Verbrennungseinrichtungen und durch deren Positionierung wird eine große Variationsbreite geboten. Die Heizleistung der einzelnen Verbrennungseinrichtungen kann nach Belieben vorgegeben werden.

Die Vorrichtung nach der Erfindung zeichnet sich ferner durch einfache Konstruktion und kostengünstigen Betrieb aus. Hervorzuheben sind ferner die Zuverlässigkeit und Betriebssicherheit, insbesondere im Vergleich mit der Verwendung aufgespannter Heizbänder oder Heizschalen, bei denen immer die Gefahr besteht, dass sich der Verbund bei nachlassenden Spannkräften lockert, wodurch die Wärmeübergangsverhältnisse negativ beeinflusst werden.

Vorzugsweise enthält der innere Ringraum Einbauten aus Stahlband oder Metallgewebe, um die Strömung zu vergleichmäßigen und den konvektiven Wärmeübergang in Richtung auf den Plastifizierzylinder zu intensivieren.

Vorzugsweise ist die Verbrennungseinrichtung als gebläseunterstützte, voll vormischende Gas-Verbrennungseinrichtung, d. h. als geschlossenes Verbrennungssystem ausgebildet.

Es ist besonders vorteilhaft, die Verbrennungseinrichtung als Ringbrenner auszubilden. Dies kann ein Rohr mit Austrittsöffnungen für die Flammen sein. Vorzugsweise ist der Ringbrenner allerdings als Flächenbrenner ausgebildet, da Flächenbrenner eine sehr gleichmäßige Temperaturverteilung Ober dem Umfang liefern. Der Flächenbrenner kann beispielsweise als Brennfläche ein Drahtgeflecht oder ein perforierte Bleches aufweisen.

Der Ringbrenner ist bevorzugt derart ausgebildet, dass die Flammen radial nach innen in den äußeren Ringraum gerichtet sind, so dass die Flammen radial auf das innere Rohr bzw. den Plastifizierzylinder gerichtet sind. Auf diese Weise ist der Strahlungswärmeanteil an der Beheizung besonders groß.

Alternativ ist es auch möglich, den Ringbrenner derart auszubilden, dass die Flammen axial in den äußeren Ringraum in Richtung seines offenen Endes gerichtet sind. Wenn der Ringbrenner als Flächenbrenner ausgebildet ist, erstreckt sich die Brennfläche im Wesentlichen über den gesamten Querschnitt des äußeren Ringraums.

Häufig ist es erwünscht oder gar erforderlich, den Plastifizierzylinder zeitweilig zu kühlen. Hierzu wird in wesentlicher Weiterbildung der Erfindung vorgeschlagen, dass der äußere Ringraum vorzugsweise im Bereich seines geschlossenen Endes mindestens einen Kühllufteinlass aufweist. Die Kühlluft wird von einem Gebläse geliefert und durchläuft denselben Weg wie sonst die Verbrennungsabgase. Im Ergebnis ergibt sich eine sehr gleichmäßige Kühlung über der axialen Erstreckung und über dem Umfang des Plastifizierzylinders. In der Regel wird man das Kühlluftgebläse wesentlich stärker auslegen als das Gebläse der Verbrennungseinrichtung. Dies ermöglicht eine sehr intensive Kühlung. Vorteilhafterweise ist das Kühlluftgebläse in seiner Leistung steuerbar.

Vorzugsweise ist der Kühllufteinlass und der Einlass der Verbrennungseinrichtung, d.h. der Einlass für das Brennstoff/Luft-Gemisch, je mit einer Absperreinrichtung versehen. Auf diese Weise vermeidet man, dass während der Heizphase heiße Abgase in das Kühlluftsystem gelangen und dass während der Kühlphase Luft in die Verbrennungseinrichtung zurückschlägt. Als Absperreinrichtungen kommen Magnetventile, Absperrklappen und dgl. in Frage.

In Weiterbildung der Erfindung wird vorgeschlagen, den Kühllufteinlass tangential auszurichten. Dadurch bildet sich im äußeren Ringraum ein starker Drall aus, während im inneren Ringraum eine hohe Strömungsgeschwindigkeit in axialer Richtung erzielt wird. Dies trägt zur Vergleichmäßigung der Kühlung bei.

Besonders günstige Verhältnisse ergeben sich dadurch, dass eine Mehrzahl von Kühllufteinlässen in einer gemeinsamen Radialebene gleichmäßig über dem Umfang des zweiten Rohres verteilt sind, und zwar vorzugsweise derart, dass sie sich bei der Erzeugung der Drallströmung gegenseitig unterstützen.

Energetisch günstige Verhältnisse während der Beheizungsphase ergeben sich dadurch, dass das zweite Rohr vorzugsweise auf seiner Außenseite wärmeisoliert ist.

Vorzugsweise ist die Vorrichtung in Achsrichtung in zwei Teile geteilt, die mit mindestens einem Verbindungselement lösbar miteinander verbindbar sind. Durch die Teilung in zwei Hälften wird die Montage erheblich erleichtert. Nach der Montage werden die beiden Teile mittels eines Verbindungselementes lösbar miteinander verbunden. Der axiale Spalt wird wie üblich abgedichtet.

Die Erfindung wird im folgenden anhand eines bevorzugten Ausführungsbeispiels im Zusammenhang mit der beiliegenden Zeichnung näher erläutert. Die Zeichnung zeigt in:
Fig. 1 einen Axialschnitt durch eine erste Ausführungsform einer erfindungsgemäße Vorrichtung zum Beheizen eines Plastifizierzylinders;
Fig. 2 eine perspektivische Ansicht einer zweiten Ausführungsform der erfindungsgemäßen Vorrichtung.

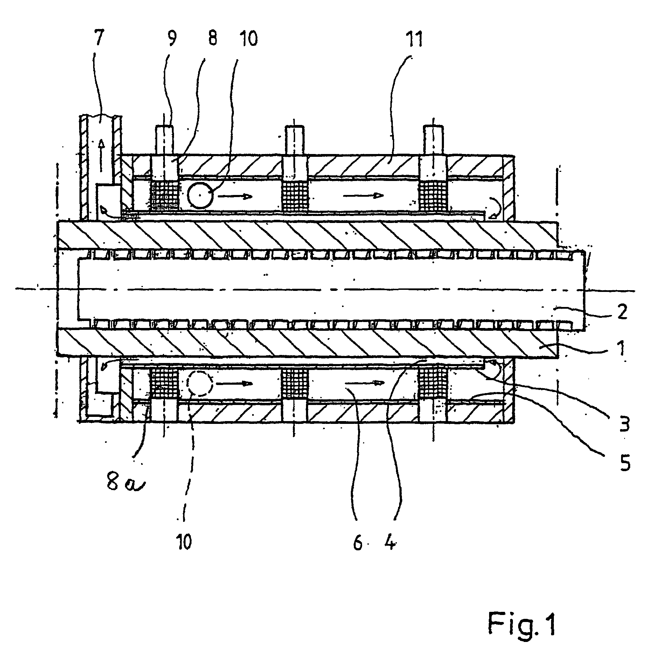

Die Vorrichtung nach Fig. 1 weist einen Plastifizierzylinder 1 auf, in welchem eine Schnecke 2 arbeitet. Der Plastifizierzylinder 1 ist mit geringem Abstand von einem inneren Rohr 3 umgeben. Zwischen dem Plastifizierzylinder 1 und dem inneren Rohr 3 bildet sich also ein innerer Ringraum 4 von relativ kleinem Querschnitt.

Das erste Rohr 3 ist mit relativ großem Abstand von einem äußeren Rohr 5 umgeben. Zwischen dem inneren Rohr 3 und dem äußeren Rohr 5 bildet sich also ein äußerer Ringraum 6 von relativ großem Querschnitt.

Wie dargestellt, ist der äußere Ringraum 6 an seinem linksseitigen Ende verschlossen, während er an seinem rechtsseitigen Ende mit dem inneren Ringraum 4 in Verbindung steht. Letzterer weist an seinem linksseitigen Ende einen Abgasauslass 7 auf.

Das äußere Rohr 5 ist mit einer Mehrzahl von mit Gas, vorzugsweise Erdgas betriebenen gebläseunterstützten Flächenbrennem 8 versehen, im vorliegenden Fall drei an der Zahl. Jeder Flächenbrenner 8 weist eine Gemischzuführung 9 auf. Die Flächenbrenner weisen eine Brennfläche 8a aus, die als Drahtgitter ausgebildet ist. Die Flammen sind radial nach innen gerichtet.

Während des Betriebes blasen die Flächenbrenner 8 Abgase in den äußeren Ringraum 6. Die Abgase durchströmen diesen Ringraum von links nach rechts und treten nach Umlenkung am rechten Ende in den inneren Ringraum 4 ein. Sie durchströmen diesen in Richtung zum linken Ende und verlassen ihn durch den Abgasauslass 7. Auf dem Weg durch den inneren Ringraum 4 geben die Abgase einen Teil ihrer Wärme konvektiv an den Plastifizierzylinder 1 ab.

Gleichzeitig beheizen die Flächenbrenner 8 jeweils eine axiale Zone des inneren Rohres 3 durch Abgabe von Wärmestrahlung. Das innere Rohr 3 gibt seinerseits Wärmestrahlung an den Plastifizierzylinder 1 ab. Aufgrund des Querschnittsunterschieds zwischen dem inneren Ringraum 4 und dem äußeren Ringraum 6 wird letzterer langsam, ersterer schnell durchströmt. Gute Verhältnisse, was den konvektiven Wärmeübergang anbelangt, sind die Folge.

Die gleichzeitige Beheizung des Plastifizierzylinders durch konvektiven Wärmeübergang und durch Strahlungswärme lässt eine sehr variable und dabei ausgeglichene Steuerung des Temperaturprofils über der axialen Länge der Heizstrecke zu. So lässt sich eine sehr gleichmäßige Temperatur einstellen. Auch können Zonen unterschiedlicher Temperatur erzeugt werden, und zwar dadurch, dass man die Positionen der Flächenbrenner 8 entsprechend wählt oder aber deren Heizleistung entsprechend einstellt. Krasse Temperatursprünge zwischen den Zonen werden durch den konvektiven Teil des Wärmeübergangs verhindert. Gleiches gilt für örtliche Überhitzung.

Die Vorrichtung bietet die Möglichkeit, den Plastifizierzylinder 1 zeitweilig zu kühlen. Hierzu ist der äußere Ringraum 6 an zwei diametral einander gegenüberliegende, tangential ausgerichtete Kühllufteinlässe angeschlossen. Diese werden von einem nicht dargestellten Kühlluftgebläse versorgt, dessen Leistung höher ist als die des Gebläses, welches die Flächenbrenner 8 beaufschlagt. Die Kühlluft geht im wesentlichen denselben Weg wie das Abgas, allerdings mit der Maßgabe, dass die tangentiale Ausrichtung der Kühllufteinlässe 10 einen starken Drall im äußeren Ringraum 6 erzeugt. Es ergibt sich eine hervorragende und vor allen Dingen gleichmäßige Kühlung. Die Strömung der Kühlluft wird durch die ringförmigen Flächenbrenner 8 nicht merklich gestört.

Zur thermischen Abschirmung der Vorrichtung während der Beheizungsphase trägt das zweite Rohr 5 auf seiner Außenseite eine Wärmeisolierung 11.

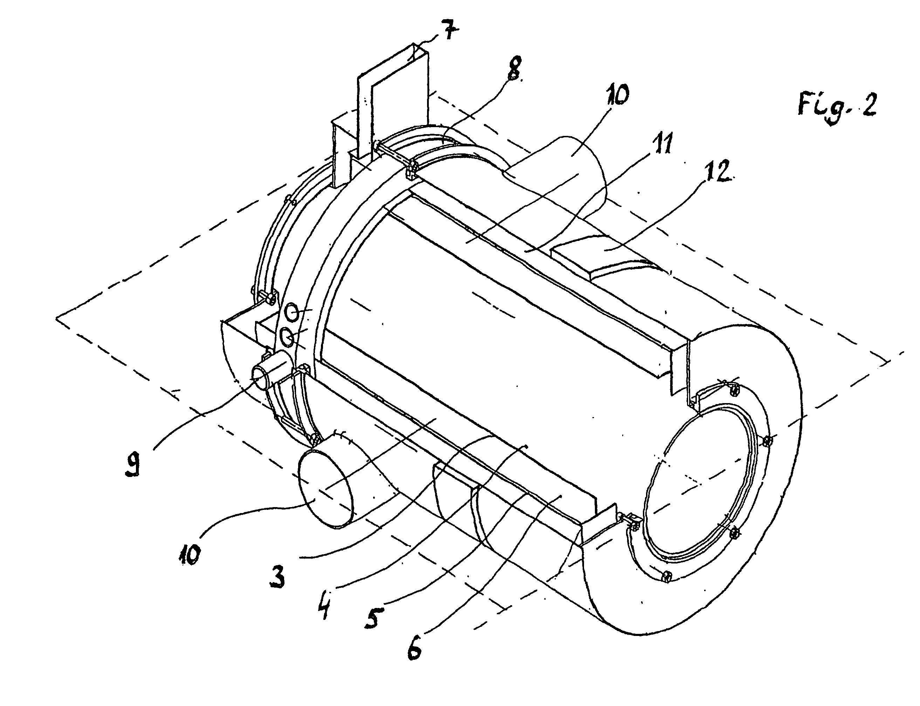

Bei der Ausführungsform nach Fig. 2 ist die gesamte Vorrichtung, d. h. insbesondere das innere Rohr 3, das äußere Rohr 5 sowie der Brenner 8 in Achsrichtung geteilt. Der Plastifizierzylinder ist nicht dargestellt. Ansonsten entspricht der Aufbau der Vorrichtung demjenigen nach Fig.1. Die Trennebene ist als gestrichelt dargestellt. Die beiden Hälften der Vorrichtung können in jeder Einbausituation einfach montiert werden. Nach der Montage werden die beiden Teile mittels eines Verbindungselementes 12 lösbar miteinander verbunden. Das Verbindungselement 12 ist als Spannband ausgebildet. Es können jedoch auch andere geeignete Verbindungselemente verwendet werden. Der axiale Spalt wird nach der Montage auf bekannte Art und Weise abgedichtet.

Im Rahmen der Erfindung sind Abwandlungsmöglichkeiten gegeben. So kann die Verbrennungseinrichtung als Ringbrenner ausgebildet sein, der derart gestaltet ist, dass die Flammen in den äußeren Ringraum austreten bzw. in diesen gerichtet sind.

Weiterhin kann der innere Ringraum 4 mit Einbauten aus Stahlband oder Metallgewebe versehen sein, um die Strömung zu vergleichmäßigen und den konvektiven Wärmeübergang zum Plastifizierzylinder 1 zu intensivieren.

Die Kühllufteinlässe 10 werden vorzugsweise mit Absperreinrichtungen ausgerüstet, um das Abgas während der Heizphase am Eindringen in das Kühlluftsystem zu hindern. Gleichzeitig vermeidet man während der Kühlphase das Eindringen der Kühlluft in das Verbrennungssystem durch entsprechende Absperreinrichtungen, beispielsweise Magnetventile.

Nach dem Ausführungsbeispiel sind die Kühllufteinlässe 10 im Bereich des linksseitigen, also des geschlossenen Endes des äußeren Ringraums 6 angeordnet. Eine Verschiebung nach rechts ist gleichermaßen möglich. Auch müssen die Kühllufteinlässe 10 nicht unbedingt auf ein und derselben axialen Höhe liegen. Will man auf den Drall im äußeren Ringraum 6 verzichten, so können die Kühllufteinlässe 10 auch radial ausgerichtet werden.

Auf die Variabilität in der Anordnung und Heizleistung der Flächenbrenner 8 wurde bereits eingegangen. Versuche haben ergeben, dass mit einem einzigen Flächenbrenner 8, angeordnet am linksseitigen Ende der Heizstrecke, bereits eine sehr gleichmäßige Beheizung des Plastifizierzylinders 1 erzielbar war. Je nach Gegebenheiten, können die Flächenbrenner 8 auch auf den rechtsseitigen Bereich der Heizstrecke konzentriert werden.

## Patentansprüche

1. Verfahren zum Beheizen eines Plastifizierzylinders für die Kunststoffbe- und -verarbeitung,
**dadurch gekennzeichnet,**
**dass** die Wärme dem Plastifizierzylinder gleichzeitig konvektiv und als Strahlungswärme mittels wenigstens einer Verbrennungseinrichtung (8) zugeführt wird, wobei die Strahlungswärme dem Plastifizierzylinder ringförmig zugeführt und das Abgas der Verbrennungseinrichtung (8) zur konvektiven Wärmeübertragung in Achsrichtung des Plastifizierzylinders geführt werden.

2. Vorrichtung zum Beheizen eines Plastifizierzylinders (1) für die Kunststoffbe- und - verarbeitung, mit
- einem inneren Rohr (3), das den Plastifizierzylinder (1) umgibt und mit diesem einen inneren Ringraum (4) definiert,
- einem äußeren Rohr (5), dass das innere Rohr (3) umgibt und mit diesem einen äußeren Ringraum (6) bildet und mindestens einer Verbrennungseinrichtung (8) zum ringförmigen Beheizen mindestens eines axialen Abschnitts des inneren Rohres (3) durch Strahlung und Konvektion,
wobei der äußere Ringraum (6) an seinem einen axialen Ende geschlossen ist und an seinem anderen axialen Ende mit dem inneren Ringraum (4) in Verbindung steht, wobei dieser an seinem entgegengesetzten Ende einen Abgasauslass (7) aufweist.

3. Vorrichtung nach Anspruch 2, **dadurch gekennzeichnet, dass** der Querschnitt des inneren Ringraums (4) kleiner als der des äußeren Ringraums (6) ist.

4. Vorrichtung nach Anspruch 2 oder 3, **dadurch gekennzeichnet, dass** der innere Ringraum (4) Einbauten aus Stahlband oder Metallgewebe enthält.

5. Vorrichtung nach einem der Ansprüche 2 bis 4, **dadurch gekennzeichnet, dass** die Verbrennungseinrichtung (8) als gebläseunterstützte, vorzugsweise voll vermischende Gas-Verbrennungseinrichtung ausgebildet ist.

6. Vorrichtung nach Anspruch 5, **dadurch gekennzeichnet, dass** die Verbrennungseinrichtung (8) als Ringbrenner ausgebildet ist.

7. Vorrichtung nach Anspruch 6, **dadurch gekennzeichnet, dass** der Ringbrenner als Flächenbrenner (8) ausgebildet ist.

8. Vorrichtung nach Anspruch 6 oder 7, **dadurch gekennzeichnet, dass** der Ringbrenner derart ausgebildet ist, dass die Flammen radial nach innen in den äußeren Ringraum (6) gerichtet sind.

9. Vorrichtung nach Anspruch 6 oder 7, **dadurch gekennzeichnet, dass** der Ringbrenner (8) derart ausgebildet ist, dass die Flammen axial in den äußeren Ringraum (6) in Richtung seines offenen Endes gerichtet sind.

10. Vorrichtung nach einem der Ansprüche 2 bis 9, **dadurch gekennzeichnet, dass** der äußere Ringraum (6) vorzugsweise im Bereich seines geschlossenen Endes mindestens einen Kühllufteinlass (10) aufweist.

11. Vorrichtung nach Anspruch 10, **dadurch gekennzeichnet, dass** der Kühllufteinlass (10) und der Einlass der Verbrennungseinrichtung (8) je mit einer Absperreinrichtung versehen sind.

12. Vorrichtung nach Anspruch 10 oder 11, **dadurch gekennzeichnet, dass** der Kühllufteinlass (10) tangential ausgerichtet ist.

13. Vorrichtung nach einem der Ansprüche 2 bis 12, **dadurch gekennzeichnet, dass** eine Mehrzahl von Kühllufteinlässen (10) auf einer gemeinsamen axialen Höhe gleichmäßig über dem Umfang des äußeren Rohres (5) verteilt sind.

14. Vorrichtung nach einem der Ansprüche 2 bis 13, **dadurch gekennzeichnet, dass** das äußere Rohr (5) vorzugsweise auf seiner Außenseite wärmeisoliert ist.

15. Vorrichtung nach einem der Ansprüche 2 bis 9, **dadurch gekennzeichnet, dass** die Vorrichtung in Achsrichtung in zwei Teile geteilt ist, die mit mindestens einem Verbindungselement (12) lösbar miteinander verbindbar sind.

## Claims

1. Method for heating a plasticising cylinder for plastics treatment and processing, **characterised in that**
the heat is supplied to the plasticising cylinder simultaneously convectively and as radiant heat by means of at least one combustion unit (8), the radiant heat being supplied to the plasticising cylinder in a ring-shaped configuration and the waste gas being supplied to the combustion unit (8) for convective heat transfer in the axial direction of the plasticising cylinder.

2. Device for heating a plasticising cylinder (1) for plastics treatment and processing with
- an inner tube (3) surrounding the plasticising cylinder (1) and together with the latter defining an inner annular space (4),
- an outer tube (5), surrounding the inner tube (3) and together with the latter forming an outer annular space (6) and
at least one combustion unit (8) for the heating in a ring-shaped configuration of at least one axial section of the inner tube (3) by radiation and convection,
the outer annular space (6) being closed at its one axial end and being connected at its other axial end to the inner annular space (4), the latter exhibiting a waste gas outlet (7) at its opposite end.

3. Device according to claim 2, **characterised in that** the cross-section of the inner annular space (4) is smaller than that of the outer annular space (6).

4. Device according to claim 2 or 3, **characterised in that** the inner annular space (4) contains fittings made of steel strip or metal mesh.

5. Device according to any one of claims 2 through 4, **characterised in that** the combustion unit (8) is designed as a fan-assisted, preferably fully premixed gas combustion unit.

6. Device according to claim 5, **characterised in that** the combustion unit (8) is designed as a ring burner.

7. Device according to claim 6, **characterised in that** the ring burner is designed as a multi-port burner (8).

8. Device according to claim 6 or 7, **characterised in that** the ring burner is designed such that the flames are directed radially inwards into the outer annular space (6).

9. Device according to claim 6 or 7, **characterised in that** the ring burner (8) is designed such that the flames are directed axially into the outer annular space (6) in the direction of its open end.

10. Device according to any one of claims 2 through 9, **characterised in that** the outer annular space (6) preferably exhibits at least one cooling air inlet (10), preferably in the vicinity of its close end.

11. Device according to claim 10, **characterised in that** the cooling air inlet (10) and the inlet of the combustion unit (8) are each provided with a shut-off feature.

12. Device according to claim 10 or 11, **characterised in that** the cooling air inlet (10) is tangentially aligned.

13. Device according to any one of claims 2 through 12, **characterised in that** a plurality of cooling air inlets (10) are distributed evenly over the circumference of the outer tube (5) at one common axial level.

14. Device according to any one of claims 2 through 13, **characterised in that** the outer tube (5) is preferably heat insulated on its outside wall.

15. Device according any one of claims 2 through 9, **characterised in that** the device is divided in the axial direction into two parts which can be detachably connected to each other with at least one connecting element (12).

## Revendications

1. Procédé de chauffage d'un cylindre de plastification pour le traitement et le façonnage de matières plastiques,
**caractérisé par le fait**
**que** la chaleur est amenée au cylindre de plastification simultanément par convection et par rayonnement à l'aide d'au moins une installation de combustion (8), où la chaleur de rayonnement est amenée au cylindre de plastification de manière annulaire et les fumées de l'installation de combustion (8) guidées en direction axiale du cylindre de plastification pour le transfert de chaleur par convection.

2. Dispositif de chauffage d'un cylindre de plastification (1) pour le traitement et le façonnage de matières plastiques, avec
- un tube intérieur (3) enveloppant le cylindre de plastification (1) et définissant avec celui-ci un espace annulaire intérieur (4),
- un tube extérieur (5) enveloppant le tube intérieur (3) et formant avec celui-ci un espace annulaire extérieur (6) et
- au moins une installation de combustion (8) pour le chauffage annulaire par rayonnement et par convection d'au moins une partie axiale du tube intérieur (3),
l'espace annulaire extérieur (6) étant fermé à l'une de ses extrémités axiales et en liaison, à l'autre extrémité axiale, avec l'espace annulaire intérieur (4), ce dernier présentant à son extrémité opposée une sortie de fumées (7).

3. Dispositif suivant la revendication 2, **caractérisé par le fait que** la section de l'espace annulaire intérieur (4) est plus petite que celle de l'espace annulaire extérieur (6).

4. Dispositif suivant l'une des revendications 2 ou 3, **caractérisé par le fait que** l'espace annulaire intérieur (4) contient des garnitures en bande métallique ou tissu métallique.

5. Dispositif suivant l'une des revendications 2 à 4, **caractérisé par le fait que** l'installation de combustion (8) est conçue sous forme d'une installation de combustion à gaz avec ventilateur, de préférence à prémélange complet.

6. Dispositif suivant la revendication 5, **caractérisé par le fait que** l'installation de combustion (8) est conçue sous forme de brûleur-couronne.

7. Dispositif suivant la revendication 6, **caractérisé par le fait que** le brûleur-couronne est conçu sous forme de brûleur à orifices (8).

8. Dispositif suivant l'une des revendications 6 ou 7, **caractérisé par le fait que** le brûleur-couronne est conçu de la sorte que les flammes soient dirigées radialement vers l'intérieur de l'espace annulaire extérieur (6).

9. Dispositif suivant l'une des revendications 6 ou 7, **caractérisé par le fait que** le brûleur-couronne (8) est conçu de la sorte que les flammes soient dirigées, de façon axiale, dans l'espace annulaire extérieur (6) en direction de son extrémité ouverte.

10. Dispositif suivant l'une des revendications 2 à 9, **caractérisé par le fait que** l'espace annulaire extérieur (6) présente, de préférence à son extrémité fermée, au moins une entrée d'air de refroidissement (10).

11. Dispositif suivant la revendication 10, **caractérisé par le fait que** l'entrée d'air de refroidissement (10) et l'entrée de l'installation de combustion (8) sont dotées chacune d'un robinet de barrage.

12. Dispositif suivant l'une des revendications 10 ou 11, **caractérisé par le fait que** l'entrée d'air de refroidissement (10) est dirigée de manière tangentielle.

13. Dispositif suivant l'une des revendications 2 à 12, **caractérisé par le fait qu'**une pluralité d'entrées d'air de refroidissement (10) est repartie régulièrement, à un niveau axial commun, sur la circonférence du tube extérieur (5).

14. Dispositif suivant l'une des revendications 2 à 13, **caractérisé par le fait que** le tube extérieur (5) est, de préférence, calorifugé à sa partie extérieure.

15. Dispositif suivant l'une des revendications 2 à 9, **caractérisé par le fait que** le dispositif est divisé, en direction axiale, en deux parties qui peuvent être liées l'une à l'autre de façon détachable à l'aide d'au moins un élément de liaison (12).
